# EUROPEAN PATENT APPLICATION

(11) **EP 2 309 487 A1**
(43) Date of publication of application: **13.04.2011**
(21) Application number: 09171957.5
(22) Date of filing: 01.10.2009
(51) Int. Cl.: G10L 15/14

(54) **Automatic speech recognition system integrating multiple sequence alignment for model bootstrapping**

(30) Priority: 11.09.2009 EP 09170062
(71) Applicant: Honda Research Institute Europe GmbH, 63073 Offenbach/Main (DE)
(72) Inventor: Ayllon Clemente, Irene, 63179 Obertshausen (DE); Heckmann, Martin, Dr., 60316 Frankfurt (DE)
(74) Representative: Rupp, Christian

(57) **Abstract**

The invention proposes a method for training an automatic speech recognition system (which can be used e.g. for robots, hearing aids, speech-controlled machines, ...), the automatic speech recognition system using Hidden Markov Models (HMMs) trained by training data,
the HMMs being initialized by applying a bootstrapping method on a reduced set of training data,
wherein the bootstrapping method transforms an ergodic HMM topology to a Bakis topology for word-level HMM initialization, the method comprising the following steps:
a. Calculation of a cost matrix assigning different costs to the permutation of state transitions as observed in the state sequences resulting from the decoding of the training data,
b. Calculation of a similarity measure for all sequences based on the cost matrix, and
c. Merging of all sequences based on their similarity measure until only one sequence is left.

## Description

### Background of the invention:

The invention generally finds application in the field of automatic speech recognition, which can be used e.g. in robots, advanced hearing aids, voice-controlled machines (e.g. in the car domain) etc. The invention thus is in the field of processing acoustically sensed signals, e.g. from a microphone.

This invention can furthermore be used for signal processing and pattern recognition.

In order to interact with humans, robots are increasingly expected to possess perceptual capabilities similar to humans. In particular, hearing capabilities are essential for social interaction and learning e.g. of robots or other voice-controlled machines. Automatic speech recognition systems allow robots to acquire knowledge by spoken interaction with a tutor.

In speech recognition usually the following tasks have to be solved:
a. Extraction of features from the sensed speech signal.
b. Training of speech unit models (words, phones ...).
c. Recognition of speech units.
d. Lexical decoding: Word dictionary (in terms of chosen units).
e. Syntactic analysis: Grammar.
f. Semantic analysis: Task model.

This invention addresses especially problems b (Construction and initialization of speech units, in this case word models, to be trained afterwards) and c (once the artificial speech recognition system has been trained) and thus proposes a higher-level processing of acoustically sensed signals comprising voice.

### State of the art:

### Phone model acquisition

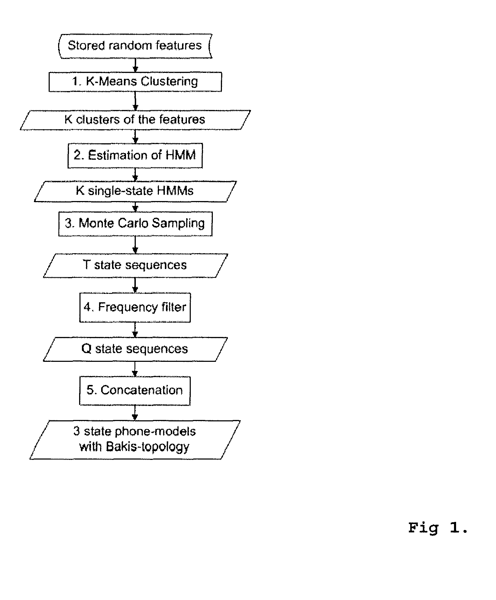

In [1], a phone-model trainer schematized in Fig 1 is proposed.

The phone representation adopted in [1] was proposed by Iwahashi in [2]. To initialize the process, a few minutes of input speech are recorded to provide a large training sample. This stored amount of features is clustered by the K-Means algorithm. Next, the resulting K clusters are used to train single-state continuous HMMs. To obtain the initial phone models, a Monte Carlo sampling yields the most frequent-state sequences. Finally, the Q most frequent state sequences are concatenated to 3-state phone-models with Bakis topology.

### Syllable model acquisition

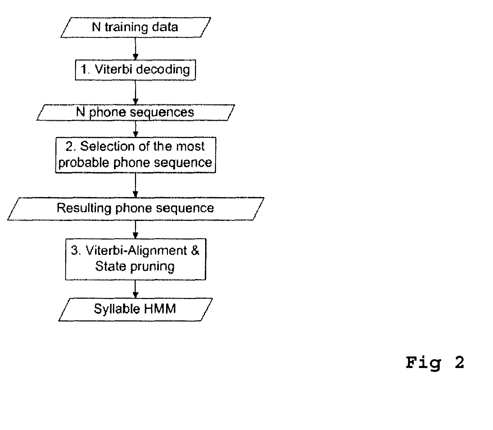

Holger Brandl extends the above approach in [4] to implement syllable models. This procedure is shown in Fig 2.

First, the best-phone sequence for each syllable in the training data is found by the Viterbi algorithm. From them, the most probable one is selected as the best matching phone-sequence for the syllable training data set. This enables the concatenation of the states of the phone-models to build an initial syllable model. Finally, Viterbi-alignment is perfomed on the training data to prune the states which contribute less than a certain ratio to the alignment.

### Sequence alignment

The Needleman-Wunsch algorithm [5] performs a global alignment on two sequences. It is commonly used in bioinformatics to align protein or nucleotide sequences. To find the alignment with the highest score, a two-dimensional array (or matrix) is allocated. This matrix is often called the F matrix. There is one row for each character in the first sequence, and one column for each character in the second sequence. The F Matrix is completed in this way:
1. F(0,j)=d*j
2. F(i,0)=d*i
3. Choice1= F(i-1,j-1)+G(v(i),t(j))
4. Choice2= F(i-1,j)+d
5. Choice3= F(i,j-1)+d
6. Rest F(i,j)= max(Choice1,Choice2 ,Choice3)

G is the similarity matrix, which codes the scores for aligned characters; d is the gap penalty, v and t are the sequences to align, and i and j are respectively the row and the column indexes of the F matrix. See [6] for an example.

As the algorithm progresses, the F(i,j) will be assigned to be the optimal score for the alignment of the first i characters in the sequence v and the first j characters in the sequence t. Once the F matrix is computed, the bottom right hand corner of the matrix is the maximum score for any alignment. To compute which alignment actually gives this score, it is started from the bottom right cell, and the values with the three possible sources (Choice1, Choice2, and Choice3 above) are compared to see where it came from. If Choice1, then v(i) and t(j) are aligned, if Choice2, then v(i) is aligned with a gap, and if Choice3, then t(j) is aligned with a gap.

The Smith-Waterman algorithm [7] is a well-known algorithm for performing local sequence alignment; that is, for determining similar regions between two nucleotide or protein sequences. Instead of looking at the total sequence, the Smith-Waterman algorithm compares segments of all possible lengths and optimizes the similarity measure. It is a variation of the Needleman-Wunsch algorithm. The main difference to the Needleman-Wunsch algorithm is that negative scoring matrix cells are set to zero (the similarity matrix G can have negative values), which renders the (thus positively scoring) local alignments visible. The algorithm is described below:
1. H(0,j)=0
2. H(i,0)=0
3. Choice1= H(i-1,j-1)+w(v(i),t(j))
4. Choice2= H(i-1,j)+w(v(i),0)
5. Choice3= H(i,j-1)+w(0,t(j))
6. Rest H(i,j)= max(0,Choice1,Choice2,Choice3)

w is the gap-scoring scheme, v and t are the sequences to align, and i and j are respectively the row and the column indexes of the H matrix.

H(i,j) is the maximum similarity-score between the substring of v of length i, and the substring of t of length j.

Backtracing starts at the highest scoring matrix cell and proceeds until a cell with score zero is encountered, yielding the highest scoring local alignment.

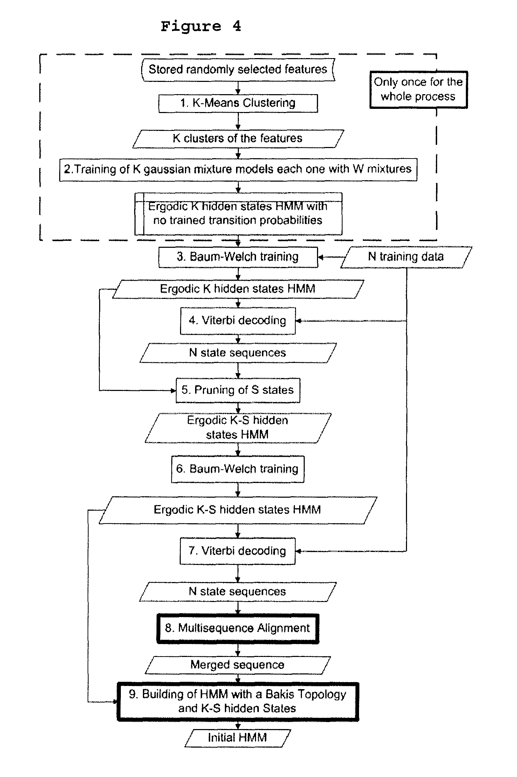

An approach for performing multiple alignments of large numbers of amino acid or nucleotide sequences is described in [8]. The basic algorithm consists of three main steps depicted in Fig 4.
1. Pair-wise alignment:
   In the original Clustal programs, the pair-wise distances were calculated using a fast approximate method. The scores are calculated as the number of k-tuple matches in the best alignment between two sequences minus a fixed penalty for every gap. Now, a slower but more accurate method is used with full dynamic programming alignments using two gap penalties and a full amino acid weight matrix. These scores are calculated as the number of identities in the best alignment divided by the number of elements compared (gap positions are excluded). At the end of all pair-wise alignments, a distance matrix is set to the alignment scores.
2. Hierarchical clustering
   The method is based on deriving a guide tree from the distance matrix. The cells of the distance matrix with the minimum value are merged and rescored by means of their arithmetic mean. The rest of the matrix is updated based on the Neighbor-Joining algorithm until matrix size is 2x2. Each transition corresponds to the creation of two branches of the tree, which are fused into a root at the end of the algorithm.
3. Progressive alignment
   Finally, the multiple sequence alignment is achieved from a series of pair-wise alignments of sequences, following the order of branching in the guide tree.

### Problem to be achieved

### Target of the invention:

Automatic speech recognition systems are generally based on model trainers. Hidden Markov Models are currently the most widely used speech recognition system. These statistical models need a large amount of labeled training data to estimate an optimal set of parameters. Unfortunately, it is very difficult to obtain large amounts of such training data in interactive learning; hence researchers aim either to train the system in an unsupervised manner or to train it with a smaller number of training data. In the latter case, the efficiency of the procedure depends on the initialization of the parameters. In these conditions, a bootstrapping phase is required to get a good set of estimates.

The current invention proposes a multiple sequence alignment procedure for speech unit models bootstrapping. This technique improves the process of configuring a HMM.

This problem is achieved by means of the features of the independent claims. The dependent claims develop further the central idea of the invention.

Further objects, features and advantages of the present invention will become obvious to the skilled person when reading the following detailed explanation of embodiments of the present invention, when taken in conjunction with the figures of the enclosed drawings.
- Fig. 1: thereby shows a phone-model trainer proposed in the prior art document [1].
- Fig. 2: shows a syllable-model trainer proposed in prior art document [4].

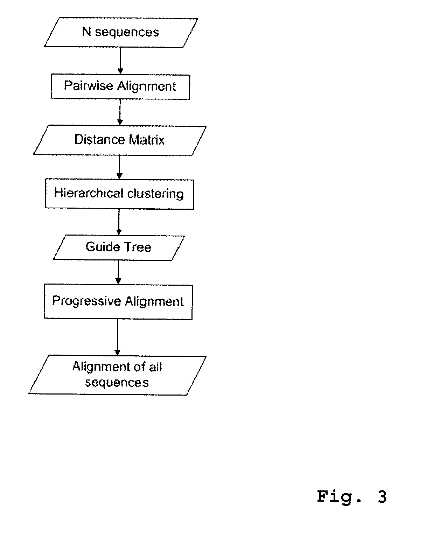

- Fig. 3: shows the Clustal algorithm known from [4].
- Fig. 4: illustrates the bootstrapping technique of the invention for the initialization of a HMM.
- Fig. 5:: Initially a sequence of states shown in (a) (1,2,3,4) is given by the respective Gaussian Mixture Model of the states (each GMM represents the probability of features which can be mapped to a signal sequence) . The target of the invention is to find a state representation with Bakis topology as shown in (b).
- Fig. 6: shows a multiple sequence merging method according to the invention.

### Detail of the invention:

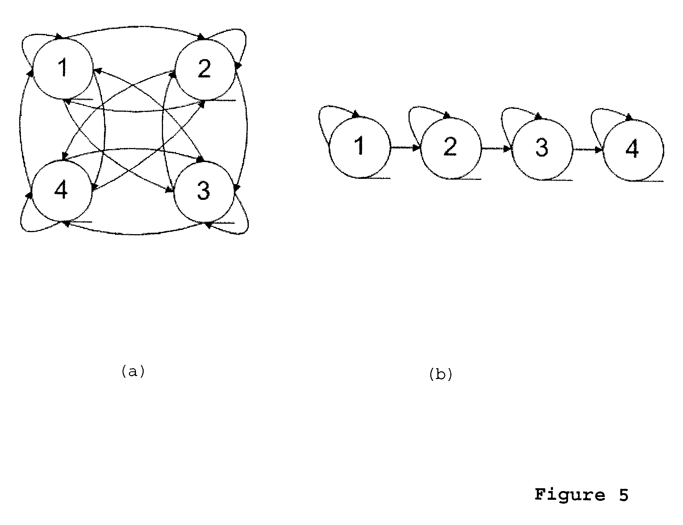

An embodiment of a method for training an automatic speech recognition system using Hidden Markov Models (HMMs) trained by training data, the HMMs being initialized by applying a bootstrapping method on a reduced set of training data, is depicted in Fig. 5.

The top of the scheme, displayed in Fig 5 by a dashed line, is based on the approach proposed by Holger Brandl in [1]. However, according to the invention, an ergodic Hidden Markov Model with K hidden states is trained instead of K single-state Hidden Markov Models. In the process described training is performed in a completely unsupervised manner and it is only executed once. The Hidden Markov Model computed is stored to be used as pre-initialization for each new model to create.

Next, the ergodic Hidden Markov Model is retrained by means of the Baum-Welch algorithm using the labeled training data set. In the bootstrapping technique according to the invention, a predefined number of states is fixed. Hence, a state pruning similar to the one described in [4] is performed. The observation estimates of the states are not changed, and the transition matrix is constructed by eliminating the rows and columns belonging to the pruned states. A Baum-Welch training refines the estimates.

The Hidden Markov Model obtained in the last step has an ergodic topology in contrast to the one obtained by Brandl above. According to the invention, the configuration of states in the Hidden Markov Model is changed into a Bakis, i.e. left-to-right, topology.

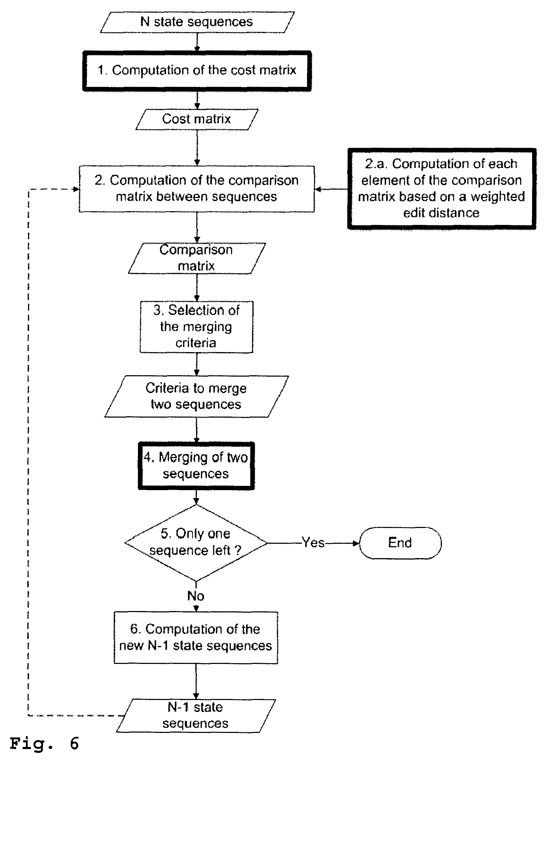

The idea behind the Bakis-topology is that transitions between states are only forwards, i.e. from left to right (See Fig. 6). Hence it is advantageous to perform a Viterbi decoding of the training data to obtain the most likely state-sequence generating the data. This results in N optimal path sequences. Each sequence contains information about a possible underlying configuration of states in a left-to-right topology for its corresponding training segment.

The invention proposes a technique to combine the information contained in the decoded sequences and to provide one optimal left-to-right configuration of states, i.e. an initial word model, given the training data. This technique is displayed in Fig 7. It consists of 3 main building blocks. The first is the calculation of a cost matrix D assigning different costs to the permutation of state transitions in the observed state sequences. The second main building block is the calculation of a similarity measure for all sequences; the resulting values are stored in the comparison matrix C. In the last building block different sequences are merged based on their similarity measure until only one sequence is left.

In the cost matrix D each element holds the probability of an element of a sequence to be followed by another, different, element. The element D(i,j) of the cost matrix D is calculated based on the frequency of the sequence j->i in the sequences following the Viterbi decoding. This differs from approaches in Bioinformatics where similarity matrices (see section on state of the art) represent the probability of a character to be aligned with another one. Another notable difference is the data employed in the construction of the matrices. In Bioinformatics several databases are available to compute them; in our method we use the sampled Viterbi sequences to estimate the cost matrix.

Next, a comparison matrix C is computed between different sequences. It is important to point out that a distance matrix is also computed in the Clustal algorithm; however the computation of the elements of the matrix is different.

According to the invention the similarity between two sequences is measured, where only insertions and substitutions are allowed. The method comprises the following steps:
1. Modifying the original sequences by adding a token at the beginning and at the end of the sequences. "v" will be referred to as the shorter sequence and "t" as the longer one in our method.
2. Construction of a matrix with size (m+1)x(n+1), where m and n are the respective lengths of the sequences. This matrix will be referred to as the similarity measure matrix S in our method.
   a. Setting the elements of the first column and first row of the similarity measure matrix S to zero.
   b. For the remaining elements set S(i,j) = max (S(i,j-1), S(i-1,j-1) ) + c
   The cost c is 1 if v (i-1) and t (j-1) are aligned, being "v" and "t" the sequences to align. Otherwise the cost is the value coded in the cost matrix. The value is read from the cost matrix by taking as column index the element "i-1" of the sequence v; and as row index the element "j-1" of the sequence t. The subtraction of 1 in the indexes is due to setting the first column and first row to zero in step 2a, which is necessary to be able to perform the main calculation.
3. When all elements of S are set, taking the value S(m+1,n+1) as the similarity measure for two sequences.

### Example:

The Viterbi algorithm results in the following sample sequences:
1. 1,2,3
2. 1,4,2,3
3. 1,2,3
4. 1,4,3

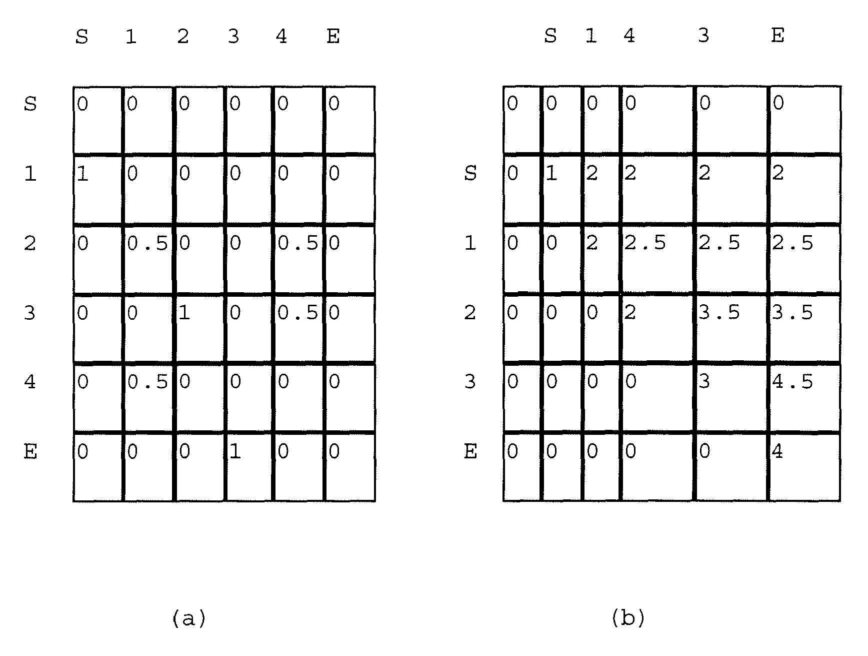

The cost matrix D shown in (a) contains the probability of a state j to be followed by another state i of the sample sequences from above.

| | 1 | 2 | 3 | 4 |
|---|---|---|---|---|
| 1 | | x | x | x |
| 2 | x | | x | x |
| 3 | x | x | | 4 |
| 4 | x | x | x | |
| (c) | | | | |

The comparison matrix C (c) is filled with the value of the similarity measure (b) computed above in step 3 for each pair of sequences. The similarity measure matrix can also be considered as a modified and more advantageous fusion of the H matrix of the Smith-Waterman algorithm and the F-Matrix of the Needleman-Wunsch algorithm, being both matrices computed in a different way as the one proposed here. Deletions are not allowed in our method. As a result, one term present in the other algorithms disappears. In contrast to the proposed method both algorithms use gap penalties as part of the cost function. The cost matrix D according to the invention is also not defined as the score of the alignment between two characters. In the proposed method, two tokens are introduced marking the start and end of the sequences. These tokens are also processed in the algorithm to strengthen the local alignment especially at the start of the sequences.

Once the comparison matrix C is computed, a criterion to merge the decoded sequences is chosen. It is possible to merge the sequences which have the minimum or the maximum similarity measure.

The next step is the merging of the two sequences. The technique to merge the sequences depends on the values in the similarity measure matrix S computed above. "v" will be referred to as the shorter sequence of length m and "t" as the longer one of length n in our method. The algorithm steps are:
1. Starting point: Position S(3,3) of the similarity measure matrix S (i=3,j=3).
2. Calculate the index of the maximum value of the column j. If the maximum value is less than 2, jump to the next column incrementing "i" 1 unit and calculate the maximum there. This indicates that the initial element of the sequences (not considering the start token) is not the best choice to start the new merged sequence. Otherwise, take the index of the row obtained as the value of "ind".
3. Sequence decoding
   a. If the difference between "ind" and "i" is bigger than 1, jump to the next column without copying any element.
   b. If "i" is bigger than "ind", copy the element t(j-1).
   c. If "i" is equal to "ind".
      i. If "i" is equal to "m+1", copy the element t(j-1).
      ii. If "i" is smaller than "m+1", copy the element v(i-1). If v(i-1) and t(j-1) are not aligned, copy also the element t(j-1). i=i +1, if "i" is smaller than "m+1".
   d. If "i" is smaller than "ind", copy the element v(i-1) and increment "i" 1 unit, repeat the process until "i" and "ind" are equal, next copy v(i-1) and t(j-1). i=i +1, if "i" is smaller than "m+1".
4. j=j+1, if "j" is smaller than "n+1". Go back to 2.
5. Clean all repetitions of adjacent numbers and delete the end tokens.

The merging algorithm proposed above is similar to the walk back proposed by Smith-Waterman. However, it is proposed forwards and the procedure of taking the elements is already realized in the walk. This method also offers the possibility to correct errors in the sequences in contrast to the state of the art. If an element of one sequence is placed wrongly, one can use the cost matrix D, which represents the probability that an element is followed by another one, and the comparison of the whole sequence with another sequence, to prune it. In the same way, new correct elements can be integrated.

Once two sequences are merged, a new list of sequences is established including the new sequence and deleting the old ones. Next, all the sequences are merged pair-wise until only one is left. Post-processing of the resulting sequence is sometimes required in order to ensure that a fixed number of states are present. This can be performed just using the relations described in the cost matrix.

The final step of the bootstrapping method is to construct the new Hidden Markov Model with Bakis topology using the succession of states computed in the last step. The Gaussian mixture parameters are conserved from the previous steps of the bootstrapping; however, according to the invention the transition matrix of this new HMM with Bakis topology is initialized with the values calculated by the cost matrix D.

### Glossary

HMM - Hidden Markov Model

http://en.wikipedia.org/wiki/Hidden_Markov_model

### Phone:

a. A speech sound or gesture considered a physical event without regard to its place in the phonology of a language.
b. A speech segment that possesses distinct physical or perceptual properties.
c. The basic unit revealed via phonetic speech analysis.

http://de.wikipedia.org/wiki/Phon_(Linguistik)

K-Means algorithm: a method of cluster analysis which aims to partition n observations into k clusters in which each observation belongs to the cluster with the nearest mean. It is similar to the expectation-maximization algorithm for mixtures of Gaussians in that they both attempt to find the centers of natural clusters in the data.

http://en.wikipedia.org/wiki/K-means_clustering

Viterbi algorithm: a dynamic programming algorithm for finding the most likely sequence of hidden states - called the Viterbi path - that results in a sequence of observed events, especially in the context of Markov information sources, and more generally, Hidden Markov Models.

Ergodic / Bakis topology (in an HMM): In an ergodic topology, the transitions between the hidden states are allowed in all directions in contrast to Bakis, where the transitions are only allowed forwards. (See [3])

Baum Welch algorithm: See [3]

### References

[1] "A self-referential childlike model to acquire phones, syllables and words from acoustic speech". Holger Brandl, Britta Wrede, Frank Joublin, Christian Goerick. In 7th IEEE International Conference on Development and Learning (2008), pp. 31-36.
[2] "Robots that learn language: a developmental approach to situated human-robot conversations". Naoto Iwahashi. Human-Robot Interaction, NilanjanSarkar, ISBN978-3-902613-13-4, pp.522, September2007, Itech Education and Publishing, Vienna, Austria
[3] "A tutorial on Hidden Markov Models and selected applications in speech recognition". Lawrence R. Rabiner (February 1989). Proceedings of the IEEE 77 (2): 257-286.
[4] "A computational model for unsupervised childlike speech acquisition". Holger Brandl. PhD thesis. To be published in 2009.
[5] "A general method applicable to the search for similarities in the amino acid sequence of two proteins". Needleman SB, Wunsch CD. (1970). J Mol Biol 48 (3): 443-53.
[6] http://en.wikipedia.org/wiki/Needleman-Wunsch_algorithm
[7] "Identification of Common Molecular Subsequences". Smith TF, Waterman MS (1981). Journal of Molecular Biology 147: 195-197.
[8] "CLUSTAL W: improving the sensitivity of progressive multiple sequence alignment through sequence weighting, position-specific gap penalties and weight matrix choice." Thompson, J. D., D. G. Higgins, and T. J. Gibson. 1994. Nucl. Acids Res. 22:4673-4680.

## Claims

1. A method for training an automatic speech recognition system, the automatic speech recognition system using Hidden Markov Models (HMMs) trained by training data, the HMMs being initialized by applying a bootstrapping method on a reduced set of training data,
wherein the bootstrapping method transforms an ergodic HMM topology to a Bakis topology for word-level HMM initialization, the method comprising the following steps:
a. Calculation of a cost matrix assigning different costs to the permutation of state transitions as observed in the state sequences resulting from the decoding of the training data,
b. Calculation of a similarity measure for all sequences based on the cost matrix, and
c. Merging of all sequences based on their similarity measure until only one sequence is left.

2. A method for constructing speech unit models for an automatic speech recognition system,
the automatic speech recognition system using Hidden Markov Models (HMM) trained by training data,
the HMMs being initialized by applying a bootstrapping method on a reduced set of training data,
wherein the bootstrapping method transforms an ergodic HMM topology to a Bakis topology for word-level HMM initialization, the method comprising the following steps:
a. Calculation of a cost matrix assigning different costs to the permutation of state transitions as observed in the state sequences resulting from the decoding of the training data,
b. Calculation of a similarity measure for all sequences based on the cost matrix, and
c. Merging of all sequences based on their similarity measure until only one sequence is left.

3. The method according to claim 1 or 2,
wherein in step b.) the similarity between two sequences is measured, where only insertions and substitutions are allowed, furthermore comprising the steps of:
a. Modifying the original sequences by adding a token at the beginning and at the end of the sequences. "v" will be referred to as the shorter sequence and "t" as the longer one in our method,
b. Construction of a similarity measure matrix S with size (m+1)x(n+l), where m and n are the respective lengths of the sequences,
i. Setting the elements of the first column and first row of the similarity measure matrix S to zero,
ii. For the remaining elements setting S(i,j) = max( S(i,j-1), S(i-1,j-1) ) + c,
wherein the cost c is 1 if v(i-1) and t(j-1) are aligned, being v and t the sequences to align, Otherwise the cost is the value coded in the cost matrix,
the value is read from the cost matrix by taking as column index the element "i-1" of the sequence v; and as row index the element "j-1" of the sequence t,
the subtraction of 1 in the indexes is due to setting the first column and first row to zero in step 3bi, which is necessary to be able to perform the main calculation,
c. When all the elements of S are set, taking the value S(m+1,n+1) as the similarity measure for two sequences.

4. The method according to claim 1 or 2,
used in combination with a cost matrix D, where each element holds the probability of an element of a sequence to be followed by another, different, element,
the element D(i,j) is calculated based on the frequency of the sequence j->i in the sequences following the Viterbi decoding (including a start and end token); and
the sequences used to estimate the cost matrix D, are computed by Viterbi decoding of a Hidden Markov Model with its respective training segments.

5. The method according to claim 4,
used in combination with a bootstrapping method based on unsupervised speech clustering and word-level HMM initialization.

6. A method to align and merge multiple sequences for the initialization of a HMM based automatic artificial speech recognition system,
the method composed of the following steps:
6.1 Computation of a distance matrix which indicates the similarities between the sequences.
6.2 Selection of a criterion to merge the sequences. It is possible to start with the pair of sequences most similar or most different.
6.3 Merging of the two sequences,
wherein "v" will be referred to as the shorter sequence of length m and "t" as the longer one of length n, the merging comprising:
a. Starting point: Position S(3,3) of a similarity measure matrix S (i=3,j=3),
b. Calculation of the index of the maximum value of the column j. If the maximum value is less than 2, jump to the next column incrementing "i" 1 unit and calculate the maximum there. It indicates that the initial element of the sequences (not considering the starting token) is not the best choice to start the new merged sequence. Otherwise, take the index obtained as the value of "ind",
c. Sequence decoding
1. If the difference between "ind" and "i" is bigger than 1, jumping to the next column without copying any element,
2. If "i" is bigger than "ind", copying the element t(j-1),
3. If "i" is equal to "ind".
i. If "i" is equal to "m+1", copying the element t(j-1),
ii. If "i" is smaller than "m+1", copying the element v(i-1). If v(i-1) and t(j-1) are not aligned, copying also the element t(j-1), i=i +1, if "i" is smaller than "m+1",
4. If "i" is smaller than "ind", copying the element v(i-1) and incrementing "i" 1 unit, repeating the process until "i" and "ind" are equal, next copying v(i-1) and t(j-1). i=i +1, if "i" is smaller than "m+1",
d. j=j+1, if "j" is smaller than "n+1".Returning to 6.3.b,
e. Cleaning of all repetitions of adjacent numbers and deleting the end tokens,
6.4 Configuring a new list of sequences including the new sequence and deleting the old ones.
6.5 Merging all the sequences pair-wise until only one is left.
6.6 Post-processing of the resulting sequence if the number of elements does not match the predefined one.

7. The method according to claim 6,
used in combination with a method to initialize the transition matrix of a HMM with Bakis topology, where the values of the transition matrix are calculated by a cost matrix according to claim 4.

8. A computer software program product,
performing a method according to any of the preceding claims when run on a computing device.

9. A computer-based artificial speech recognition system, trained using speech unit models produced by the method according to claim 2.

10. A robot or voice-controlled machine;
having acoustical sensing means and a speech recognition system according to claim 9.

11. Use of a speech recognition system according to claim 9 in robots, advanced hearing aids or voice-controlled machines.

## Amended claims

### Amended claims in accordance with Rule 137(2) EPC.

**1.** A method for training an automatic speech recognition system, the automatic speech recognition system using Hidden Markov Models (HMMs) trained by training data, the HMMs being initialized by applying a bootstrapping method on a reduced set of training data,
wherein the bootstrapping method transforms an ergodic HMM topology to a Bakis topology for word-level HMM initialization, the method comprising the following steps:
a. Calculation of a cost matrix assigning different costs to the permutation of state transitions as observed in the state sequences resulting from the decoding of the training data,
b. Calculation of a similarity measure for all sequences based on the cost matrix, and
c. Merging of all sequences based on their similarity measure until only one sequence is left.

**2.** The method of claim 1 comprising the further step of constructing a speech unit model for the automatic speech recognition system.

**3.** The method according to claim 1 or 2,
wherein in step b.) the similarity between two sequences is measured, where only insertions and substitutions are allowed, furthermore comprising the steps of:
a. Modifying the original sequences by adding a token at the beginning and at the end of the sequences, "v" will be referred to as the shorter sequence and "t" as the longer one in our method,
b. Construction of a similarity measure matrix S with size (m+1) x (n+1), where m and n are the respective lengths of the sequences,
i. Setting the elements of the first column and first row of the similarity measure matrix S to zero,
ii. For the remaining elements setting S(i,j) = max( S(i,j-1), S(i-1,j-1)) + c,
wherein the cost c is 1 if v(i-1) and t(j-1) are aligned, being v and t the sequences to align, Otherwise the cost is the value coded in the cost matrix,
the value is read from the cost matrix by taking as column index the element "i-1" of the sequence v; and as row index the element "j-1" of the sequence t,
the subtraction of 1 in the indexes is due to setting the first column and first row to zero in step 3bi, which is necessary to be able to perform the main calculation,
c. When all the elements of S are set, taking the value S(m+1, n+1) as the similarity measure for two sequences.

**4.** The method according to claim 1 or 2,
used in combination with a cost matrix D, where each element holds the probability of an element of a sequence to be followed by another, different, element,
the element D(i,j) is calculated based on the frequency of the sequence j->i in the sequences following the Viterbi decoding (including a start and end token); and
the sequences used to estimate the cost matrix D, are computed by Viterbi decoding of a Hidden Markov Model with its respective training segments.

**5.** The method according to claim 4,
used in combination with a bootstrapping method based on unsupervised speech clustering and word-level HMM initialization.

**6.** The method according to any one of the preceding claims, wherein for the initialization of a HMM based automatic artificial speech recognition system multiple sequences are aligned and merged, comprising the following steps:
6.1 Computation of a distance matrix which indicates the similarities between the sequences.
6.2 Selection of a criterion to merge the sequences. It is possible to start with the pair of sequences most similar or most different.
6.3 Merging of the two sequences,
wherein "v" will be referred to as the shorter sequence of length m and "t" as the longer one of length n, the merging comprising:
a. Starting point: Position S(3,3) of a similarity measure matrix S (i=3,j=3),
b. Calculation of the index of the maximum value of the column j. If the maximum value is less than 2, jump to the next column incrementing "i" 1 unit and calculate the maximum there. It indicates that the initial element of the sequences (not considering the starting token) is not the best choice to start the new merged sequence. Otherwise, take the index obtained as the value of "ind",
c. Sequence decoding
1. If the difference between "ind" and "i" is bigger than 1, jumping to the next column without copying any element,
2. If "i" is bigger than "ind", copying the element t(j-1),
3. If "i" is equal to "ind".
i. If "i" is equal to "m+1", copying the element t(j-1),
ii. If "i" is smaller than "m+1", copying the element v(i-1). If v(i-1) and t(j-1) are not aligned, copying also the element t(j-1), i=i +1, if "i" is smaller than "m+1",
4. If "i" is smaller than "ind", copying the element v(i-1) and incrementing "i" 1 unit, repeating the process until "i" and "ind" are equal, next copying v(i-1) and t(j-1). i=i +1, if "i" is smaller than "m+1",
d. j=j+1, if "j" is smaller than "n+1". Returning to 6.3.b,
e. Cleaning of all repetitions of adjacent numbers and deleting the end tokens,
6.4 Configuring a new list of sequences including the new sequence and deleting the old ones.
6.5 Merging all the sequences pair-wise until only one is left.
6.6 Post-processing of the resulting sequence if the number of elements does not match the predefined one.

**7.** The method according to claim 6,
used in combination with a method to initialize the transition matrix of a HMM with Bakis topology, where the values of the transition matrix are calculated by a cost matrix according to claim 4.

**8.** A computer software program product,
performing a method according to any of the preceding claims when run on a computing device.

**9.** A computer-based artificial speech recognition system, trained using speech unit models produced by the method according to claim 2.

**10.** A robot or voice-controlled machine;
having acoustical sensing means and a speech recognition system according to claim 9.

**11.** Use of a speech recognition system according to claim 9 in robots, advanced hearing aids or voice-controlled machines.
